# EUROPEAN PATENT APPLICATION

(11) **EP 1 982 857 A1**
(43) Date of publication of application: **22.10.2008**
(21) Application number: 06843049.5
(22) Date of filing: 22.12.2006
(51) Int. Cl.: B60G 11/16, F16F 1/12

(54) **SPRING SEAT OF SUSPENSION**

(30) Priority: 08.02.2006 JP 2006031158
(71) Applicant: Nissan Motor Co., Ltd., Kanagawa 221-0023 (JP)
(72) Inventor: YAMAKAWA, Hiroshi NISSAN MOTOR CO., LTD., Intellectual Property Department, Kanagawa 243-0123 (JP); KYOGOKU, Hitoshi NISSAN MOTOR CO., LTD., Intellectual Property Department, Kanagawa 243-0123 (JP)
(74) Representative: Görz, Ingo
(86) International application number: PCT/JP2006/325590
(87) International publication number: WO 2007/091378

(57) **Abstract**

A spring seat for a suspension arranged between a vehicle body side member and a wheel side member, the spring seat supporting an end portion of a coil spring of the suspension, wherein rigidity of the spring seat in the orthogonal-to-axis direction of the coil spring is smaller than rigidity of the spring seat in the axial direction of the coil spring.

## Description

### TECHNICAL FIELD

The present invention relates to a spring seat for suspension, which is used for an automobile and the like.

### BACKGROUND ART

Japanese Patent Application Publication No. 2002-114015 discloses a technique which gives a directional variation in rigidity to a bush provided between an axle member (or a wheel carrier) connected to wheels and a suspension link member for supporting the axle member in the vehicle body side member by providing arc-shaped holes (spaces) to the inside of the bush. This technique makes it possible: to maintain a change in tire position appropriately when a load is inputted to the contact point of the tire on a road in the front-rear direction or width direction of the vehicle while the vehicle is turned or is running over a protrusion on the road; and thus to enhance the driving performance and stability.

### DISCLOSURE OF THE INVENTION

Even employment of the technique, however, brings the following problem to a suspension system which includes coil springs each extending in the upward-downward direction of the vehicle. Specifically, in the suspension system, an end of each coil spring is connected to the vehicle body side member whereas the other end of the coil spring is connected to the axle member or the suspension link member. In addition, seat-shaped elastic members (hereinafter referred to as a "spring seat") are interposed between the coil spring and the vehicle body side member, and between the coil spring and the axle member or the suspension link member. Rigidity of each spring seat, that is, the rigidity in a direction orthogonal to an axis of the coil spring acts as large resistance against the change in tire position. For this reason, even though the foregoing technique is employed, it is still difficult to enhance the driving performance and stability by obtaining characteristics exactly as designed.

The present invention has been made with the foregoing problem taken into consideration. An object of the present invention is to restrain the adjustment of the tire position from being adversely affected by the rigidity of the spring seat, more specifically, the rigidity in a direction orthogonal to the axis of the coil spring.

An aspect of the present invention is a spring seat for a suspension arranged between a vehicle body side member and a wheel side member, the spring seat supporting an end portion of a coil spring of the suspension, wherein rigidity of the spring seat in a direction orthogonal to the axis of the coil spring is smaller than rigidity of the spring seat in a direction of the axis of the coil spring.

### BRIEF DESCRIPTION OF THE DRAWINGS

Fig. 1 is a perspective view showing a suspension link according to an embodiment of the present invention.
Fig. 2 is a plan view showing a spring seat according to the embodiment of the present invention, which is attached to a trailing arm.
Fig. 3A is a bottom plan view of the spring seat according to the first embodiment of the present invention.
Fig. 3B is a cross-sectional view of the spring seat according to the first embodiment of the present invention, taken along the IIIB-IIIB line of Fig. 3A.
Fig. 4 is a diagram showing how the condition of the trailing arm changes when a rearward load (or a rearward force) in the front-rear direction of the vehicle is inputted to the trailing arm from the contact point of the tire.
Fig. 5 is a graph showing a relationship between the rearward load (or the rearward force) in the front-rear direction of the vehicle, which is inputted to the contact point of the tire, and a toe angle.
Fig. 6A is a bottom plan view of a spring seat according to a second embodiment of the present invention.
Fig. 6B is a cross-sectional view of the spring seat according to the second embodiment of the present invention, taken along the VIB-VIB line of Fig. 6A.
Fig. 7A is a bottom plan view of a spring seat according to a third embodiment of the present invention.
Fig. 7B is a cross-sectional view of the spring seat according to the third embodiment of the present invention, taken along the IIIB-IIIB line of Fig. 7A.
Fig. 8A is a bottom plan view of a spring seat according to a fourth embodiment of the present invention.
Fig. 8B is a cross-sectional view of the spring seat according to the fourth embodiment of the present invention, taken along the VIIIB-VIIIB line of Fig. 8A.
Fig. 9A is a bottom plan view of a spring seat according to a fifth embodiment of the present invention.
Fig. 9B is a cross-sectional view of the spring seat according to the fifth embodiment of the present invention, taken along the IXB-IXB line of Fig. 9A.
Fig. 9C is a cross-sectional view of the spring seat according to the fifth embodiment of the present invention, taken along the IXC-IXC line of Fig. 9A.
Fig. 10A is a bottom plan view of a spring seat according to a 6th embodiment of the present invention.
Fig. 10B is a cross-sectional view of the spring seat according to the 6th embodiment of the present invention, taken along the XB-XB line of Fig. 10A.
Fig. 10C is a cross-sectional view of the spring seat according to the 6th embodiment of the present invention, taken along the XC-XC line of Fig. 10A.
Fig. 11A is a bottom plan view of a spring seat according to a 7th embodiment of the present invention.
Fig. 11B is a cross-sectional view of the spring seat according to the 7th embodiment of the present invention, taken along the XIB-XIB line of Fig. 11A.
Fig. 11C is a cross-sectional view of the spring seat according to the 7th embodiment of the present invention, taken along the XIC-XIC line of Fig. 11A.
Fig. 12A is a bottom plan view of a spring seat according to an 8th embodiment of the present invention.
Fig. 12B is a cross-sectional view of the spring seat according to the 8th embodiment of the present invention, taken along the XIIB-XIIB line of Fig. 12A.
Fig. 13A is a bottom plan view of a spring seat according to a 9th embodiment of the present invention.
Fig. 13B is a cross-sectional view of the spring seat according to the 9th embodiment of the present invention, taken along the XIIIB-XIIIB line of Fig. 13A.

### BEST MODE FOR CARRYING OUT THE INVENTION

Detailed descriptions will be provided hereinbelow for the preferred embodiments of the present invention by referring to the drawings.

### (First Embodiment)

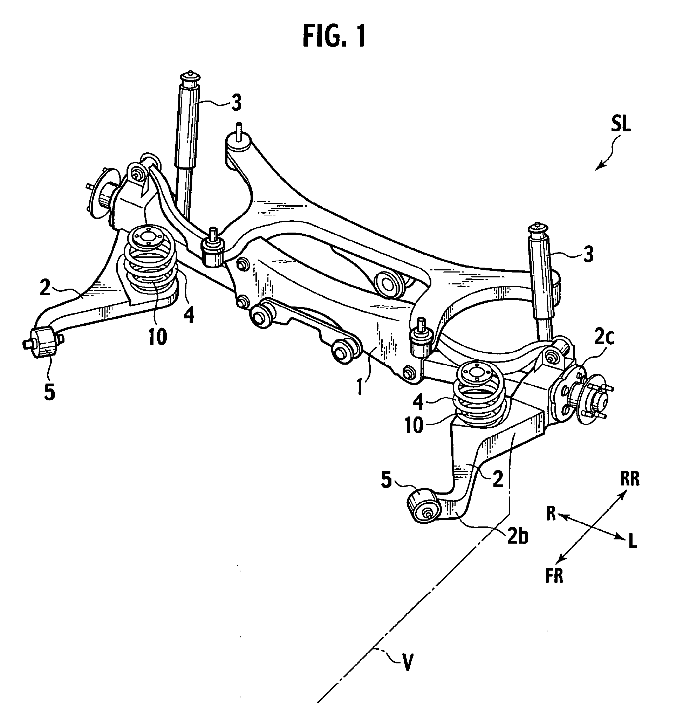

Fig. 1 is a perspective view showing a suspension link SL according to an embodiment of the present invention.

In the suspension link SL, as shown in Fig. 1, a suspension member 1 is arranged in the width direction of the vehicle. Trailing arms (or suspension arms) 2 each extending in the front-rear direction of the vehicle are arranged in the light and left end portions of the suspension member 1, respectively. Shock absorbers 3 are attached to the rear portion of each trailing arm 2 in the front-rear direction of the vehicle. Coil springs 4 are attached to the middle portion of each trailing arm 2 in the front-rear direction of the vehicle, which extend in top-bottom direction of the vehicle. Trailing arm bushes 5 are attached to the front portion of each trailing arm 2 in the front-rear direction of the vehicle.

The bottom ends of the coil springs 4 are attached to the tops of spring seats 10 provided to the trailing arms 2, respectively. In addition, other spring seats 10 are attached to parts of the vehicle body side member V, and thus the top ends of the coil springs 4 are attached to this additional spring seats 10. In other words, the top and bottom ends of the coil springs 4 are supported by the spring seats 10 provided on the trailing arms 2 and the spring seats 10 provided on the vehicle body side member V, respectively.

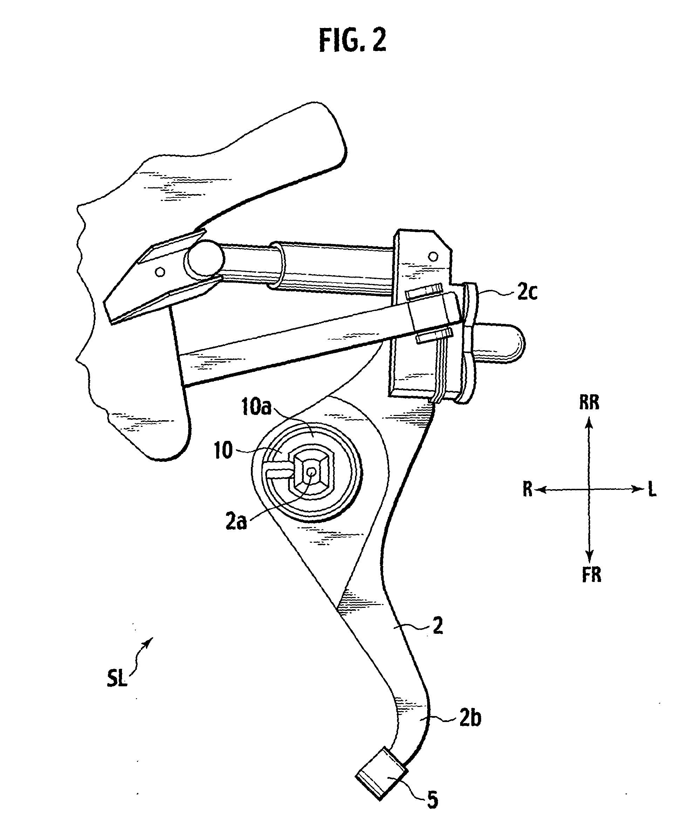

Fig. 2 is one spring seat 10 attached to its corresponding trailing arm 2.

As shown in Fig. 2, a cylindrical fitting convex part 2a which juts out upward (almost in parallel to a direction in which the center axis of the coil spring 4 extends) from the top surface of the trailing arm 2 is formed on the top surface in the middle portion of the trailing arm 2 in the front-rear direction of the vehicle. The spring seat 10, which is annular, is fitted to this fitting convex part 2a. The bottom end of the coil spring 4 is placed on the seat surface 10a of this spring seat 10.

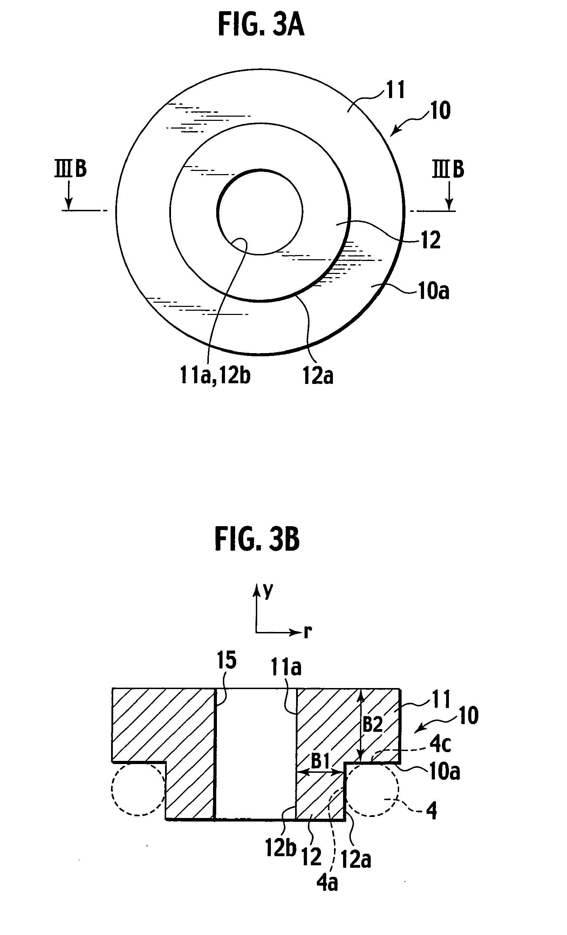

Figs. 3A and 3B each show one spring seat 10 according to the first embodiment of the present invention. These drawings show, as a representative example, one spring seat 10 which is provided to the vehicle body side member V, and which supports the top end of its corresponding coil spring 4.

As shown in Fig. 3, the spring seat 10 is configured of: a main body part 11, which is almost shaped like a disc, and in whose center portion a through-hole having a cylindrical inner circumferential surface 11a is provided; and a protrusion part 12 which is formed in integration with the main body part 11, which juts out downward from the circumferential portion of the through-hole on the bottom surface of the main body part 11, and which has a cylindrical inner circumferential surface 12b in its center portion. The spring seat 10 is formed of an appropriate rubber elastic body, for example, natural rubber or the like.

The bottom surface of the main body part 11 in the spring seat 10 (or the seat surface 10a) abuts on a part of the coil spring 4 in the axial direction, or a top end part 4c thereof. Additionally, an outer circumferential surface 12a of the protrusion part 12 in the spring seat 10 abuts on a top end inner circumferential part 4a of the coil spring 4. The thickness B1 of the protrusion part 12 in the radial direction of the coil spring 4 (or a direction orthogonal to the center axis of the coil spring 4, and indicated by reference symbol "r" in the drawing, hereinafter simply referred to as a "orthogonal-to-axis direction") is smaller than the thickness B2 of the main body part 11 in the center axis direction of the coil spring 4 (or a direction indicated by reference symbol "y" in the drawing, hereinafter simply referred to as an "axial direction").

The inner circumferential surface 11a of the main body part 11 and the inner circumferential surface 12a of the protrusion part 12 constitute a fitting hole 15 having a seamless cylindrical inner circumferential surface. Fig. 2 shows how the fitting convex part 2a of the trailing arm 2 is fitted in the fitting hole 15.

Hereafter, descriptions will be provided for the operation/working-effect of the spring seat 10 in the suspension link SL.

In this suspension link SL, the two end portions of each coil spring 4 in the axial direction are supported by (or held between) spring seats 10. In each spring seat 10, specifically, the thickness of the protrusion part 12 in the orthogonal-to-axis direction of the coil spring 4 is smaller than the thickness of the main body part 11 in the axial direction of the coil spring 4. This makes the rigidity Gr of the spring seat 10 in the orthogonal-to-axis direction of the coil spring 4 (hereinafter simply referred to as the "rigidity Gr in the orthogonal-to-axis direction") smaller than the rigidity Gy of the spring seat 10 in the axial direction of the coil spring 4 (hereinafter simply referred to as the "rigidity Gy in the axial direction") (Gr<Gy). The rigidity Gr is a value representing how the spring seat 10 is hard to deform when a predetermined external force is applied to the spring seat 10 in the orthogonal-to-axis direction of the coil spring 4, i.e., in a shear direction of the spring seat 10. This value is, for example, a value obtained by multiplying the inverse number of the amount of deformation caused at this time by a particular value. The rigidity Gy is a value representing how the spring seat 10 is hard to deform when a predetermined external force is applied to the spring seat 10 in the axial direction of the coil spring 4. This value is, for example, a value obtained by multiplying the inverse number of the amount of deformation caused at this time by a particular value.

Because the rigidity of the spring seat 10 in its shear direction (or in the orthogonal-to-axis direction of the coil spring 4) is designed to be smaller as described above, the spring seat 10 makes it possible to restrain the rigidity of the spring seat 10 from adversely affecting the adjustment of the tire position, and accordingly to enhance the controllability and stability of the vehicle with the designed characteristic of the tire being fully exhibited.

The spring seat 10 is capable of bringing about the above-described effect through the simple configuration in which the thickness B1 of the protrusion part 12 in the orthogonal-to-axis direction of the coil spring 4 is designed to be smaller than the thickness B2 of the main body part 11 in the axial direction of the coil spring 4.

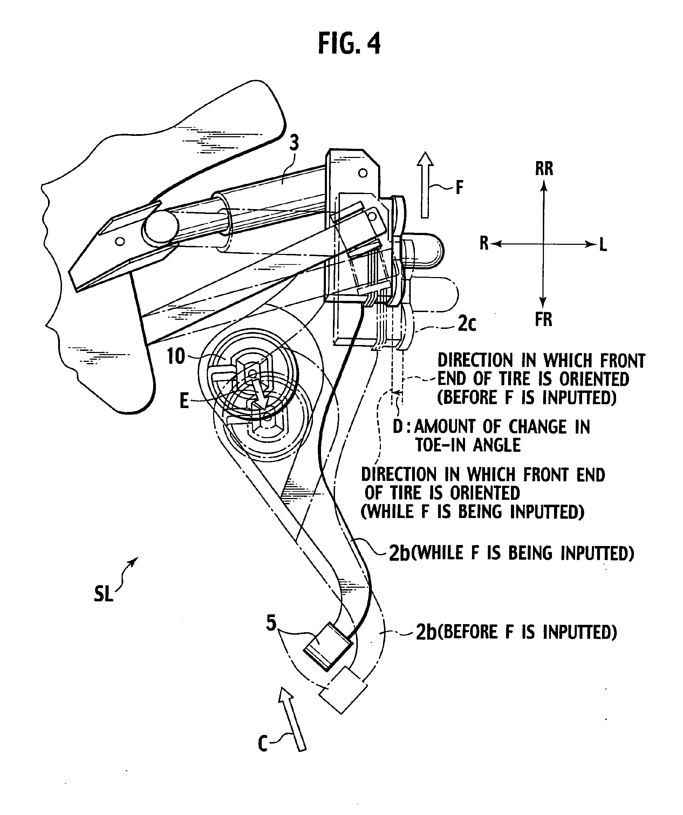

Fig. 4 shows how the condition of the trailing arm 2 changes when a rearward load (or a rearward drawing: a rearward force F) in the front-rear direction of the vehicle is inputted to the trailing arm 2 from the contact point of the tire. In the drawing, the fine lines indicate a condition of the trailing arm 2 before the rearward force F is inputted to the trailing arm 2, whereas the bold lines indicate a condition of the trailing arm 2 after the rearward force F is inputted to the trailing arm 2.

When designing the suspension link SL, the change which occurs in the position of the tire when a load is inputted to the contact point of the tire in the front-rear direction of the vehicle or on the width direction of the vehicle is adjusted by doing things such as using the difference between the rigidity of the arm bush 5 in the axial direction and the rigidity of the arm bush 5 in the orthogonal-to-axis direction. In the case where, for example, the rearward force F is inputted to the contact point of the tire, a front end part 2b of the trailing arm 2 is sometimes set up to provide displacement further inward in the width direction of the vehicle (in a direction indicated by an arrow C in the drawing). Thereby, an axle part (or a hub part) 2c is turned, and a toe angle (or a toe-in angle) is accordingly displaced to the side where the vehicle behavior stabilizes (as shown by an arrow D in the drawing).

In this case, however, the coil spring 4 which is interposed between the vehicle body side member V and the trailing arm 2, and which connects the two components to each other, as well as the spring seat 10 which holds the coil spring constitutes a series spring which applies a biasing force to the trailing arm 2 in the shear direction of the spring seat 10 (or the orthogonal-to-axis direction of the coil spring 4), that is, in a substantially horizontal direction. As shown by reference symbol E in the drawing, the biasing force works as a reaction force which pushes back the displaced front end part 2b of the trailing arm 2 both frontward and outward in the width direction of the vehicle. This reaction force hinders the toe angle from being displaced to the side where the toe angle can stabilize the vehicle's behavior.

Even in this case, because the rigidity of the spring seat 10 in its shear direction (or in the orthogonal-to-axis direction of the coil spring 4) is small, this small rigidity reduces the reaction force which pushes back the trailing arm 2, and thus allowing the toe angle of the axle part 2c to be displaced to the side where the tow angle can stabilize the vehicle's behavior in accordance with the design.

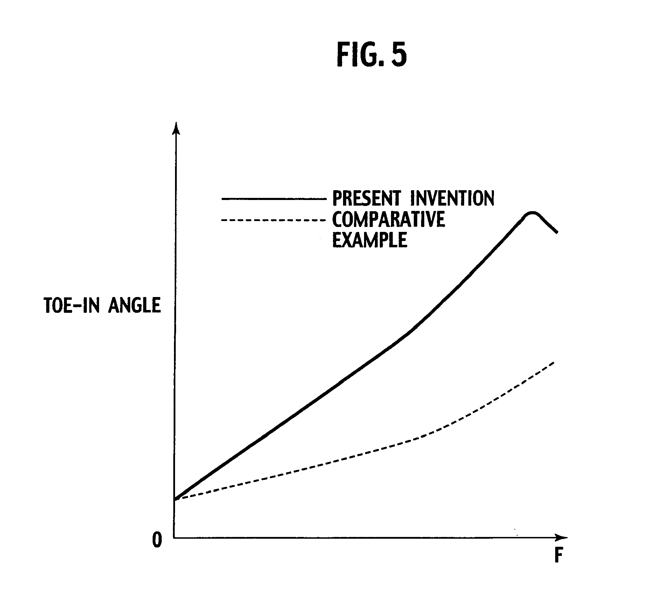

Fig. 5 is a graph showing a relationship between the rearward load (or the rearward force F) in the front-rear direction of the vehicle, which is inputted to the contact point of the tire, and the toe angle (or the toe-in angle). The solid line indicates an example employing the suspension link according to the embodiment of the present invention. The broken line indicates an example employing a suspension link using a suspension seat in which the rigidity Gr in the orthogonal-to-axis direction is larger than the rigidity Gy in the axial direction (hereinafter referred to as a "comparative example).

In the present embodiment, the rigidity of the spring seat 10 in its shear direction (or in the orthogonal-to-axis direction of the coil spring 4) is designed to be smaller. For this reason, as shown in Fig. 5, a larger toe angle can be obtained relative to the predetermined strength of the rearward force F compared to the comparative example. In other words, the present invention enables the toe angle of the axle part 2c to be displaced to the side where the toe angle can stabilize the vehicle's behavior in accordance with the design.

Descriptions will be provided hereinbelow for the other embodiments of the present invention. Components which are the same as those in the first embodiment will be denoted by the same reference numerals, and descriptions for those components will be omitted.

### (Second Embodiment)

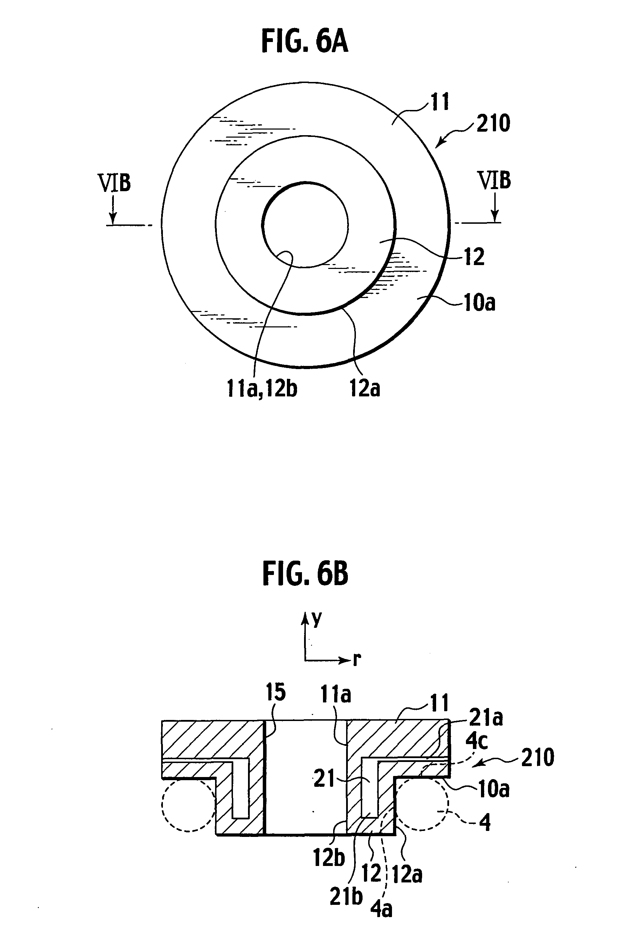

Figs. 6A and 6B each shows a spring seat 210 according a second embodiment.

As shown in Figs. 6A and 6B, a space part 21 is made inside the spring seat 210. The space part 21 includes: a space part 21a, formed inside the main body part 11, which extends inward in the radial direction from the outer peripheral end of the main body part 11; and a space part 21b, formed inside the protrusion part 12, which extends in the axial direction, and which communicates with the space part 21a. The space part 21a is open outward of the spring seat 210 in its outside end in the radial direction thereof, and thus plays a role as a slit to have the space 21b communicated with the outside of the spring seat 210. It does not matter whether or not the space parts 21a and 21b continue in the circumferential direction of the spring seat 210, as long as the space parts 21a and 21b communicate with the outside. In addition, various cross-sectional shapes can be adopted for the space part 21 depending on purposes such as the purpose of making the rigidity of a part of the spring seat 210 locally different from the rigidity of the rest of the spring seat 210, and the purpose of preventing stress concentration in a particular part of the spring seat 210. The spring seat 210 having such a shape makes it possible to make the rigidity Gr in the orthogonal-to-axis direction smaller than the rigidity Gy in the axial direction, as well. As a result, the spring seat 210 is capable of realizing the same effect as the spring seat according to the foregoing embodiment through the simple configuration.

### (Third Embodiment)

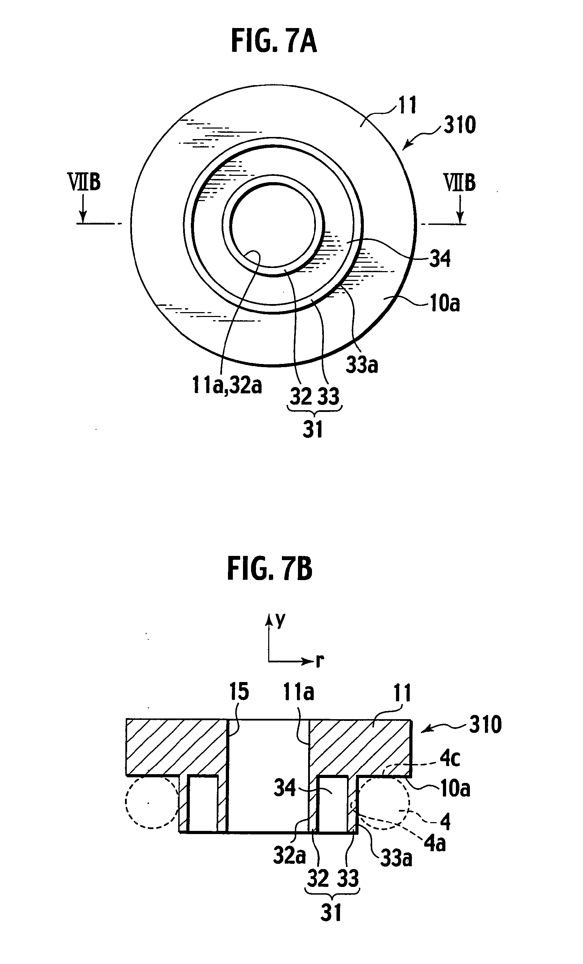

Figs. 7A and 7B show a spring seat 310 according to the third embodiment.

As shown in Figs. 7A and 7B, the spring seat 310 includes a protrusion part 31 which is formed in integration with the main body part 11, which juts out downward from the circumferential portion of the through-hole on the bottom surface of the main body part 11, and which has a cylindrical inner circumferential surface 32a in the center of the protrusion part 31. The protrusion part 31 is constructed in a double-wall structure which includes an inner circumferential wall 32 and an outer circumferential wall 33. An annular space part 34, which is open downward, is formed inside the protrusion part 31, or between the inner circumferential wall 32 and the outer circumferential 33. In this case, the inner circumferential surface 32a of the inner circumferential wall 32 along with the inner circumferential surface 11a of the main body part 11 constitutes the fitting hole 15 into which the fitting convex part 2a of the trailing arm 2 is fitted. An outer circumferential surface 33a of the outer circumferential wall 33 abuts on the end portion inner circumferential part 4a of the coil spring 4. Various cross-sectional shapes can be adopted for the space part 34, like the space part 21 according to the second embodiment. The spring seat 310 having such a shape makes it possible to make the rigidity Gr in the orthogonal-to-axis direction smaller than the rigidity Gy in the axial direction, as well. As a result, the spring seat 310 is capable of realizing the same effect as the spring seats according to the foregoing embodiments through the simple configuration.

### (Fourth Embodiment)

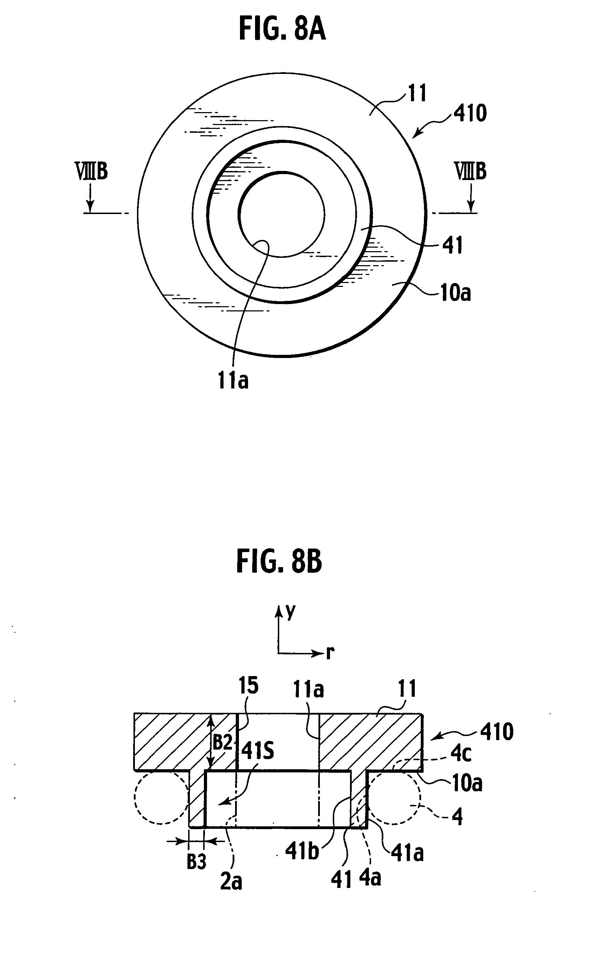

Figs. 8A and 8B each show a spring seat 410 according to the fourth embodiment.

As shown in Figs. 8A and 8B, the spring seat 410 includes a protrusion part (circumferential wall) 41 which is formed in integration with the main body part 11, and which juts out downward from the circumferential portion of the through-hole on the bottom surface of the main body part 11. At least an outer circumferential surface 41a of this protrusion part 41 abuts on the end portion inner circumferential part 4a of the coil spring 4. An inner circumferential surface 41b of the protrusion part 41 is located outward, in the radial direction, of the inner circumferential surface 11a of the through-hole in the main body part 11. As a result, only the inner circumferential surface 11a of the through-hole in the main body part 11 constitutes the fitting hole 15 into which the fitting convex part 2a of trailing arm 2 is fitted. Once the fitting convex part 2a of the trailing arm 2 is fitted in the fitting hole 15, as shown in Fig. 8B, a space 41S is formed between the inner circumferential surface 41b of the protrusion part 41 and the outer circumferential surface of the fitting convex part 2a of the trailing arm 2. The thickness B3 of the protrusion part 41 in the orthogonal-to-axis direction of the coil spring 4 is smaller than the thickness B2 of the main body part 11 in the axial direction of the coil spring 4. The spring seat 410 having such a shape makes it possible to make the rigidity Gr in the orthogonal-to-axis direction smaller than the rigidity Gy in the axial direction, as well. As a result, the spring seat 410 is capable of realizing the same effect as the spring seats according to the foregoing embodiments through the simple configuration.

### (Fifth Embodiment)

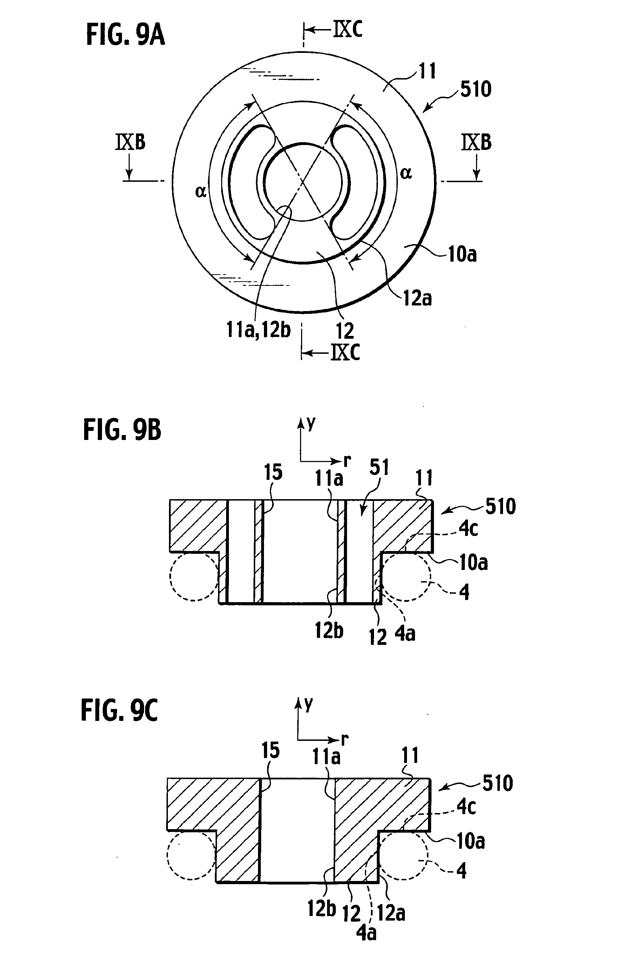

Figs. 9A, 9B and 9C each show a spring seat 510 according to the fifth embodiment.

As shown in Figs. 9A, 9B and 9C, the spring seat 510 includes arc-shaped holes 51, as space parts, which penetrate the main body part 11 and the protrusion part 21 in the axial direction. In other words, once the spring seat 510 is fitted to the fitting convex part 2a of the trailing arm 2, the arc-shaped holes 51 as the space parts are located in the circumferential portion of the fitting hole 15 of the spring seat 510, or in the circumferential portion of the fitting convex part 2a of the trailing arm 2. Various cross-sectional shapes can be adopted for the arc-shaped holes 51 depending on purposes such as the purpose of making the rigidity of a part of the spring seat locally different from the rigidity of the rest of the spring seat, and the purpose of preventing stress concentration in a particular part of the spring seat. The spring seat 510 having such a shape makes it possible to make the rigidity Gr in the orthogonal-to-axis direction smaller than the rigidity Gy in the axial direction, as well. As a result, the spring seat 510 is capable of realizing the same effect as the spring seats according to the foregoing embodiments through the simple configuration.

In addition, when the spring seat 510 is viewed in the axial direction of the coil spring 4, the arc-shaped holes 51 are placed in a particular angular range α about the center axis of the spring seat 510. The placement of the arc-shaped holes 51 each subtending the particular angle range α makes it possible to limit an direction which makes the rigidity Gr in the orthogonal-to-axis direction smaller than the rigidity Gy in the axial direction to a predetermined angular range about the center axis of the spring seat 510. For example, when the direction which makes the rigidity Gr in the orthogonal-to-axis direction smaller than the rigidity Gr in the axial direction is matched with the front-rear direction of the vehicle, the spring seat 510 according to the fifth embodiment is capable of realizing the same effect as the spring seats according to the foregoing embodiments, and of maintaining its high rigidity in the width direction of the vehicle, as well as accordingly of enhancing the driving stability.

### (6th Embodiment)

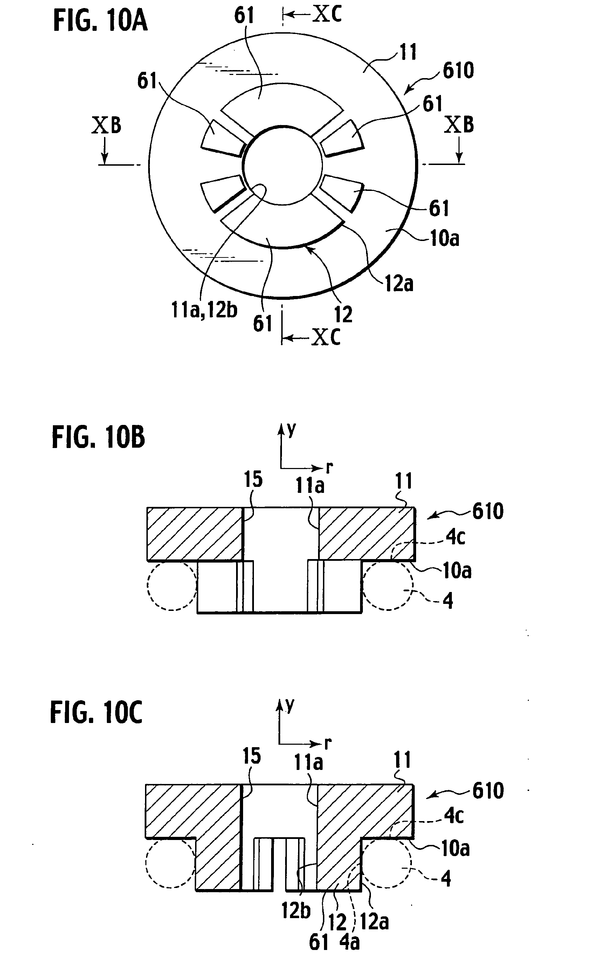

Figs. 10A, 10B and 10C each show a spring seat 610 according to a 6th embodiment.

In the spring seat 610, as shown in Figs. 10A, 10B and 10C, the protrusion part 12, which is formed in integration with the main body part 11, and which juts out downward from the circumferential portion of the through-hole on the bottom surface of the main body part 11, is divided into multiple blocks 61 in its circumferential direction. The cross-sectional shapes of the respective blocks 61 into which the protrusion 12 is divided are not limited to shapes shown in the drawing. Any single block 61 subtending a predetermined angular range may be further divided into multiple blocks in the circumferential direction of the protrusion part 12. The spring seat 610 having such a shape makes it possible to make the rigidity Gr in the orthogonal-to-axis direction smaller than the rigidity Gy in the axial direction, as well. As a result, the spring seat 610 is capable of realizing the same effect as the spring seats according to the foregoing embodiments through the simple configuration.

### (7th Embodiment)

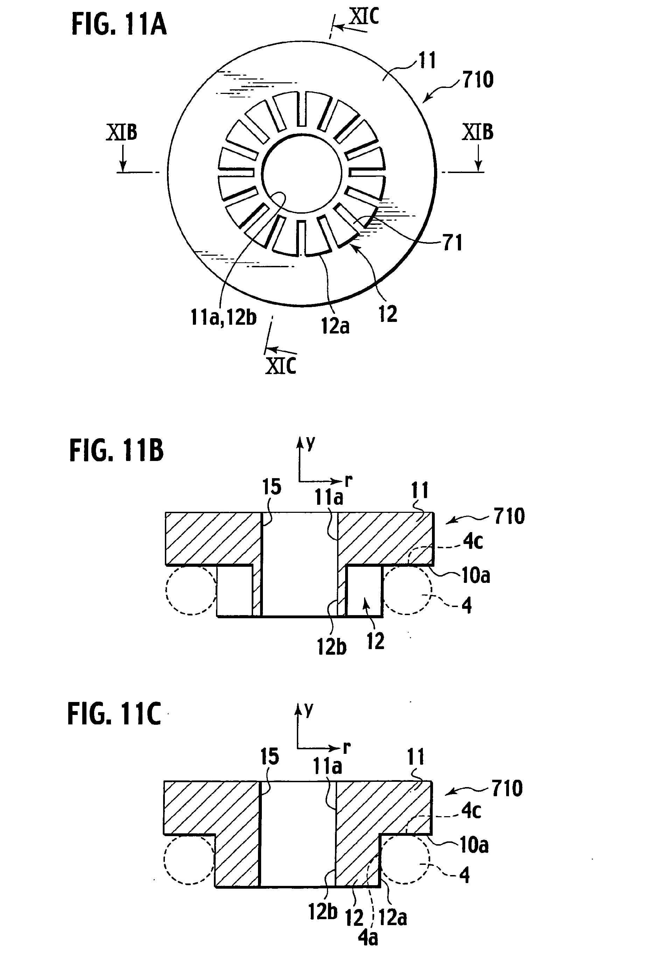

Figs. 11A, 11B and 11C each show a spring seat 710 according to a 7th embodiment.

In the spring seat 710, as shown in Figs. 11A, 11B and 11C, multiple slits 71 radially extending outward from the respective positions in the radial directions are formed in the protrusion part 12, which is formed in integration with the main body part 11, and which juts out downward from the circumferential portion of the through-hole on the bottom surface of the main body part 11. The slits 71 are arranged at equal intervals in the circumferential direction of the protrusion part 12. The cross-sectional shapes of the respective slits 71 are not limited to the shapes shown in the drawing. For example, the cross-sectional shapes of the respective slits 71 may become progressively wider toward their outer ends in the radial direction. Otherwise, the cross-sectional shapes of the respective slits 71 may be discontinuous in the radial direction. The depths of the respective slits 71 in the axial direction may be changed depending on the necessity. The depth and cross-sectional shape of each of the slits 71 may be changed depending on where the slit 71 is located in the circumferential direction. The spring seat 710 having such a shape makes it possible to make the rigidity Gr in the orthogonal-to-axis direction smaller than the rigidity Gy in the axial direction, as well. As a result, the spring seat 710 is capable of realizing the same effect as the spring seats according to the foregoing embodiments through the simple configuration.

### (8th Embodiment)

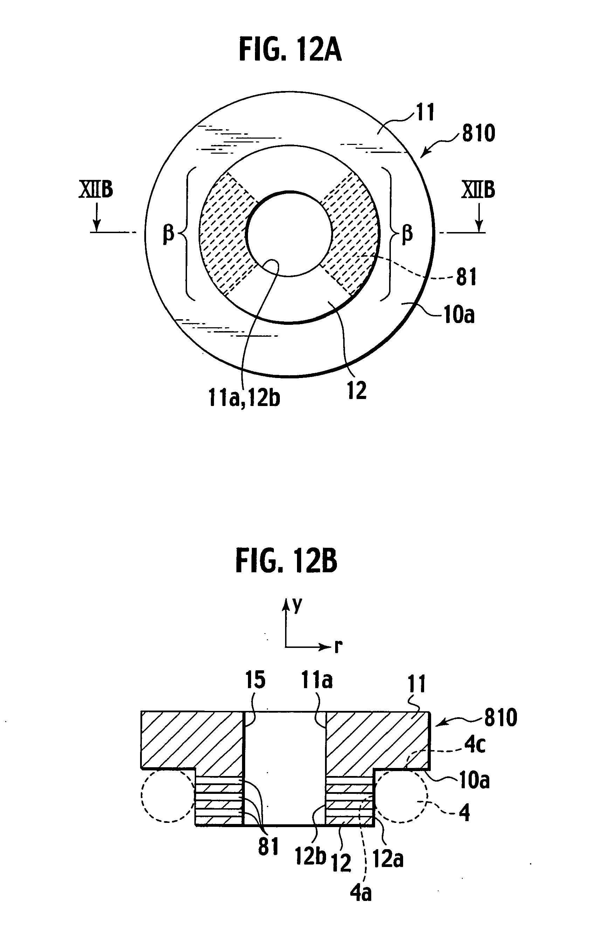

Figs. 12A and 12B each show a spring seat 810 according to an 8th embodiment.

In the spring seat 810, as shown in Figs. 12A and 12B, multiple bored holes 81 are formed in the protrusion part 12 which is formed in integration with the main body part 11, and which juts out downward from the peripheral portion of the through-hole on the bottom surface of the main body part 11, in a way that the bored holes 81 penetrate the protrusion part 12 in the radial direction of the spring seat 810. The bored holes 81 are formed in each of partial areas β, as indicated by dotted diagonal lines in Fig. 12A, in the protrusion part 12 in its circumferential direction. For example, as shown in Fig. 12B, the multiple bored holes 81 are formed and arrayed in the axial direction of the protrusion part 12. These bored holes 81 may or may not be formed in parallel to each other. The cross-sectional shape of each bored holes 81 may be circular, or may be polygonal. In addition, the diameter of each bored hole 81 may become progressively larger toward the outer end in the radial direction of the spring seat 810, or may become progressively smaller toward the outer end of the radial direction thereof. The spring seat 810 having such a shape makes it possible to make the rigidity Gr in the orthogonal-to-axis direction smaller than the rigidity Gy in the axial direction, as well. As a result, the spring seat 810 is capable of realizing the same effect as the spring seats according to the foregoing embodiments through the simple configuration.

It should be noted that, in the spring seats 610, 710 and 810 shown in Figs. 10A to 12B, the concaves and convexes are formed on the side surface 12a of the protrusion part 12 supporting the end portion inner circumferential part 4a of the coil spring 4. Specifically, the spaces between each two neighboring blocks 61 in the spring seat 610, the slits 71 in the spring seats 710, and the bored holes 81 in the spring seat 810 each constitutes a concave, which is hollowed inward in the radial direction, on the side surface 12a of the protrusion part 12. On the other hand, the portions of the side surface 12a of the protrusion part 12, which abut on the end portion inner circumferential part 4a of the coil spring 4, that is, portions other than the abovementioned spaces between each two neighboring blocks 61, the slits 71, and the bored holes 81, each constitutes a convex, which juts out in the radial direction, on the side surface 12a of the protrusion part 12.

In the case where, as described above, the concaves and convexes are formed on the side surface of the protrusion part 12 which supports the end portion inner circumferential part 4a of the coils spring 4, it is possible to make the rigidity of the protrusion part 12 in the shear direction (or in the orthogonal-to-axis direction) smaller than the rigidity of the protrusion part 12 in a compressing direction (or in the axial direction). This is because, when an external force is applied to the spring seat in its shear direction, the load concentrates on the convex parts abutting on the end portion inner circumferential part 4a of the coil spring 4, and the convex parts are accordingly easy to deform elastically. In addition, while the spring seat is being fitted to the coil spring 4, it is possible to make the aggregate rigidity of the spring seat and the coil spring 4 in the orthogonal-to-axis direction smaller than the aggregate rigidity thereof in the axial direction because the shear direction of the protrusion part 12 conforms to the direction of the orthogonal-to-axis direction of the coil spring 4, and the compressing direction of the protrusion part 12 conforms to the direction of the axial direction of the coil spring 4.

### (9th Embodiment)

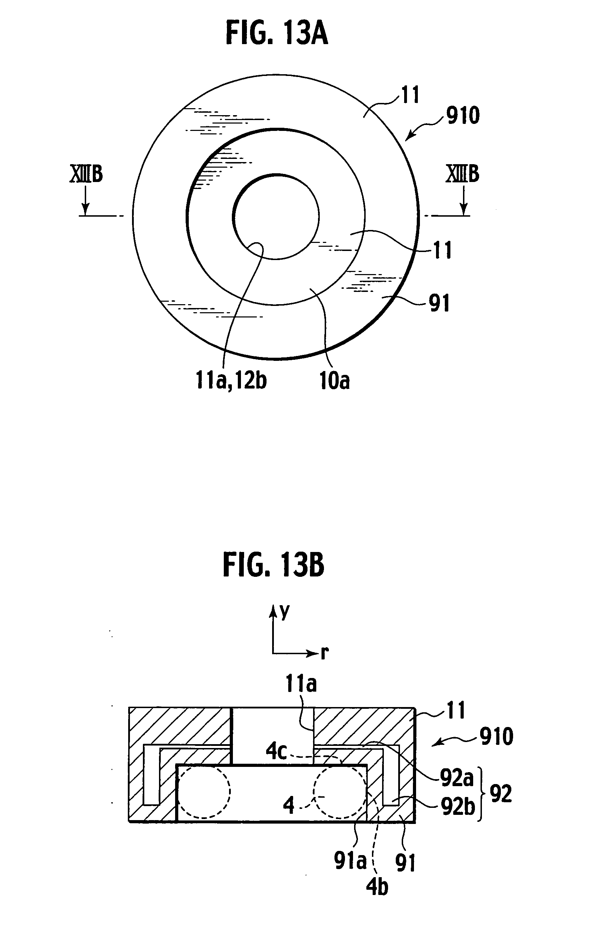

Figs. 13A and 13B each show a spring seat 910 according to a 9th embodiment.

As shown in Figs. 13A and 13B, the spring seat 910 includes a protrusion part 910 which is formed in integration with the main body part 11, and which juts out downward from the outer circumferential portion on the bottom surface of the main body part 11, which also has a cylindrical inner circumferential surface 91a in its inside in the radial direction of the spring seat 910. As the structure for making the rigidity Gr in the orthogonal-to-axis direction smaller that the rigidity Gy in the axial direction, for example, a space part 92 similar to the space part according to the first embodiment may be provided inside the spring seat 910. In this respect, the space part 92 is configured of: a space part 92a which is formed inside the main body part 11, and which extends outward in the radial direction of the spring seat 910 from an inner peripheral end portion of the main body part 11; and a space part 92b which is formed inside the protrusion part 92, and which extends in the axial direction, which also communicates with the space part 92a. An inside end portion of the space part 92a in its radial direction is open inward the spring seat 910 in its radial direction, and thus plays a function of a slit having the space part 92b communicated with the outside of the spring seat 910. An end portion of the coil spring 4 is situated inside the protrusion part 91 in its radial direction with the external side surface 4b of the coil spring 4 in its radial direction abutting on the inner circumferential surface 91a of the protrusion part 91. The spring seat 910 having such a shape makes it possible to make the rigidity Gr in the orthogonal-to-axis direction smaller than the rigidity Gy in the axial direction, as well. As a result, the spring seat 910 is capable of realizing the same effect as the spring seats according to the foregoing embodiments through the simple configuration.

Furthermore, protrusion parts of the above-described type may be respectively provided to both the inner and outer circumferences of the end portion of the coil spring 4. In this case, the end portion of the coil spring 4 is designed to be supported by the protrusion parts respectively provided to the inner and outer circumferences thereof in a way that the end portion of the coil spring 4 is interposed between the protrusion parts. Even in this case, the aggregate rigidity Gr of the protrusion parts in the inner and outer circumferences thereof in the orthogonal-to-axis direction is smaller than the rigidity Gy of the spring seat 910 in the axial direction.

In the cases of the foregoing embodiments, the rigidity Gr of the spring seat in the orthogonal-to-axis direction is designed to be smaller than the rigidity Gy of the spring seat in the axial direction by employing the various shapes of the spring seat. However, the method of adjusting the rigidities is not limited to the employment of the shapes in the foregoing embodiments. For the purpose of making the rigidity Gr of the spring seat in the orthogonal-to-axis direction smaller than the rigidity Gy of the spring seat in the axial direction, for example, different materials may be used to form the spring seat depending on the locations of the respective parts in the spring seat. In addition, it is possible to make the rigidity Gr of the spring seat in the orthogonal-to-axis direction smaller than the rigidity Gy of the spring seat in the axial direction, for example, by using a material, for the protrusion part 12 of the spring seat, which is easier to elastically change in form than a material used for forming the main body part 11.

The spring seats, which have been shown, are based on the premise that the fitting convex part 2a of the trailing arm 2 is fitted into the fitting hole 15 from the main body part 11 through the protrusion part 12. Nevertheless, the fitting convex part 2a may be designed to be situated only inside of the main body part 11, and not inside of the protrusion part 12. Only the inside of the inner circumferential surface 11a of the main body part 11 of the spring seat is fitted to the fitting convex part 2a, for example, by making the amount of protrusion of the fitting convex part 2a smaller (or lowering the height of the fitting convex part 2a from a portion of the top surface of the trailing arm 2 which abuts on the spring seat). The spring seat thus designed makes it possible to make the rigidity Gr in the orthogonal-to-axis direction smaller than the rigidity Gy in the axial direction, as well. As a result, the spring seat thus designed is capable of realizing the same effect as the spring seats according to the foregoing embodiments through its simple configuration.

The foregoing embodiments have been described citing the suspension link SL in which, as shown in Fig. 1, the shock absorbers 3 and the coil springs 4 are arranged in their respective locations which are different from one to another in the horizontal direction. Nevertheless, the type of the suspension link is not limited to the type shown in Fig. 1. For example, a suspension link in which the shock absorbers are inserted in the respective coil springs may be used instead. In this case, each spring seat is designed to be formed along the perimeter of the external cylinder of the corresponding shock absorber. Even in this case, when the coil spring seat is formed in any one of the forgoing shapes, it is possible to make the rigidity Gr in the orthogonal-to-axis direction smaller than the rigidity Gy in the axial direction, as well. As a result, the spring seat is capable of realizing the same effect as the spring seats according to the foregoing embodiments through its simple configuration.

As exemplified as each of the preferred embodiments of the present invention, the spring seat (10, 210, 310, 410, 510, 610, 710, 810 and 910) of the suspension according to the present invention supports the end portion of the corresponding coil spring (4) in the suspension (SL) arranged between the vehicle body side member (V) and the wheel side member (2c), and the rigidity (Gr) of the spring seat in the orthogonal-to-axis direction (r) of the coil spring (4) is smaller than the rigidity (Gy) of the spring seat in the axial direction (y) of the coil spring (4).

In the spring seat (10, 210, 310, 410, 510, 610, 710, 810 and 910), it is desirable that the direction which makes the rigidity (Gr) of the coil spring seat (4) in the orthogonal-to-axis direction (r) of the coil spring (4) smaller than the rigidity (Gy) of the coil spring seat (4) in the axial direction (y) should be within a particular range (α, β) when the spring seat is viewed in the axial direction of the coil spring. Furthermore, it is desirable that the particular range (α, β) should include the front-rear direction of the vehicle.

Additionally, it is desirable that the spring seat (10, 210, 310, 410, 510, 610, 710, 810 and 910) should include: a main body part (11) for supporting an end part (4c) of an end portion of the coil spring (4) in the axial direction of the coil spring (4); and a circumference supporting part (12, 31, 41, 61, 81 and 91) for supporting at least one of the inner and outer circumferences (4a, 4b) of the end portion of the coil spring (4). Concurrently, it is desirable that, in the direction which makes the rigidity (Gr) of the spring seat (10, 210, 310, 410, 510, 610, 710, 810 and 910) in the orthogonal-to-axis direction (r) of the coil spring (4) smaller than the rigidity (Gy) of the spring seat (10, 210, 310, 410, 510, 610, 710, 810 and 910) in the axial direction (y) of the coil spring (4) when circumference supporting part (12, 31, 41, 61, 81 and 91) is viewed in the axial direction of the coil spring (4), the circumference supporting part (12, 31, 41, 61, 81 and 91) is formed to have the rigidity (Gr) in the orthogonal-to-axis direction (r) of the coil spring (4) smaller than the rigidity (Gy) in the axial direction (y) of the coil spring (4).

Moreover, it is desirable that a space part (21, 34, 51, 71, 81 and 92) should be provided to the circumference supporting part (12, 31, 41, 61, 81 and 91) in the spring seat (10, 210, 310, 410, 510, 610, 710, 810 and 910).

In addition, in the spring seat (10, 210, 310, 410, 510, 610, 710, 810 and 910), it is desirable that the surface (12a, 33a, 41a and 91a) of the circumference supporting part (12, 31, 41, 61, 81 and 91) which supports any one of the inner and outer circumferences (4a and 4b) of the end portion of the coil spring (4) includes concaves and convexes.

Additionally, in the spring seat (10, 210, 310, 410, 510, 610, 710, 810 and 910), it is desirable that the circumference supporting part (12, 31, 41, 61, 81 and 91) includes a slit (21a, 71 and 92a) which extends in the orthogonal-to-axis direction (r) of the coil spring (4) to have the space part (21, 34, 51, 71, 81 and 92) communicated with an outside of the spring seat.

Furthermore, in the spring seat (10, 210, 310, 410, 510, 610, 710, 810 and 910), it is desirable that the space part is a through-hole (51 and 81) which penetrates the circumference supporting part (12, 31, 41, 61, 81 and 91) in any one of the axial direction (y) and the orthogonal-to-axis direction (r) of the coil spring (4).

It should be noted that the embodiments of the present invention have been described only for the purpose of exemplifying the present invention, and that the present invention is not limited to the embodiments. For example, any combination of the embodiments depending on the necessity, and a change or modification which is applied to any one of the embodiments within the technical scope of the present invention are all included in the scope of the present invention. Examples of the combination of the embodiments include: a configuration in which the slit is provided to the protrusion part in the spring seat with the space part being included in the protrusion part; a configuration in which a part of the spring seat including the through-hole is formed of a material different from that used to form the rest of the spring seat; and a configuration in which concaves and convexes are provided to the side surface of the protrusion part for supporting the outer circumferential portion of the end portion of the coil spring from outside in the radial direction of the coil spring.

This application is based upon and claims the benefit of priority from Japanese Patent Application No. 2006-031158 filed on February 8, 2006, the entire contents of which are incorporated herein by reference.

### INDUSTRIAL APPLICABILITY

The spring seat for the suspension according to the present invention makes it possible to restrain the adjustment of tire position from being adversely affected by the rigidity of the spring seat, because the rigidity of the spring seat in the orthogonal-to-axis direction of the coil spring is designed to be smaller than the rigidity of the spring seat in the axial direction of the coil spring. For this reason, the spring seat for the suspension according to the present invention is industrially applicable.

## Claims

1. A spring seat for a suspension arranged between a vehicle body side member and a wheel side member, the spring seat supporting an end portion of a coil spring of the suspension, wherein rigidity of the spring seat in an orthogonal-to-axis direction of the coil spring is smaller than rigidity of the spring seat in an axial direction of the coil spring.

2. The spring seat for the suspension according to claim 1, wherein directions in which the rigidity of the spring seat in the orthogonal-to-axis direction of the coil spring is smaller than the rigidity of the spring seat in the axial direction of the coil spring are within a particular range when the spring seat is viewed in the axial direction of the coil spring.

3. The spring seat for the suspension according to claim 2, wherein the particular range includes a front-rear direction of a vehicle.

4. The spring seat for the suspension according to any one of claims 1 to 3, comprising:
a main body part for supporting an end part of an end portion of the coil spring in the axial direction of the coil spring; and
a circumference supporting part for supporting at least one of inner and outer circumferences of the end portion of the coil spring,
wherein, in the directions in which the rigidity of the spring seat in the orthogonal-to-axis direction of the coil spring is smaller than the rigidity of the spring seat in the axial direction of the coil spring when the spring seat is viewed in the axial direction of the coil spring, the circumference supporting part is formed to have the rigidity in the orthogonal-to-axis direction of the coil spring smaller than the rigidity in the axial direction of the coil spring.

5. The spring seat for the suspension according to claim 4, wherein a space part is provided to the circumference supporting part.

6. The spring seat for the suspension according to any one of claims 4 and 5, wherein a surface of the circumference supporting part which supports any one of the inner and outer circumferences of the end portion of the coil spring includes concaves and convexes.

7. The spring seat for the suspension according to claim 5,
wherein the circumference supporting part includes a slit which extends in the orthogonal-to-axis direction of the coil spring to have the space part communicated with an outside of the spring seat.

8. The spring seat for the suspension according to claim 5,
wherein the space part is a through hole which penetrates the circumference supporting part in the axial direction of the coil spring.

9. The spring seat for the suspension according to claim 5,
wherein the space part is a through hole which penetrates the circumference supporting part in the orthogonal-to-axis direction of the coil spring.
